# EUROPÄISCHE PATENTSCHRIFT

(11) **EP 0 978 223 B1**
(45) Veröffentlichungstag und Bekanntmachung des Hinweises auf die Patenterteilung: **01.03.2006**
(21) Anmeldenummer: 98921465.5
(22) Anmeldetag: 17.04.1998
(51) Int. Cl.: H05B 41/38

(54) **VERFAHREN ZUR DIMMUNG EINER IM SEKUNDÄRKREIS EINES ÜBERTRAGERS ANGEORDNETEN LEUCHTSTOFFLAMPE UND ANORDNUNG ZUR DURCHFÜHRUNG DES VERFAHRENS**
METHOD FOR DIMMING A FLUORESCENT LAMP ARRANGED IN THE SECONDARY CIRCUIT OF A TRANSFORMER AND ARRANGEMENT TO IMPLEMENT SAID METHOD
PROCEDE DE GRADATION D'UN TUBE FLUORESCENT DISPOSE DANS LE CIRCUIT SECONDAIRE D'UN TRANSDUCTEUR ET SYSTEME PERMETTANT DE METTRE LEDIT PROCEDE EN OEUVRE

(30) Priorität: 24.04.1997 DE 19717307
(43) Veröffentlichungstag der Anmeldung: 09.02.2000
(73) Patentinhaber: SIEMENS AKTIENGESELLSCHAFT, 80333 München (DE)
(72) Erfinder: BIRK, Berthold, D-63739 Aschaffenburg (DE)
(86) Internationale Anmeldenummer: PCT/EP1998/002289
(87) Internationale Veröffentlichungsnummer: WO 1998/048598

(56) Entgegenhaltungen:
- EP-A- 0 210 830
- EP-A- 0 599 598
- GB-A- 2 047 486
- US-A- 4 686 427
- US-A- 5 420 481

## Beschreibung

Die Erfindung betrifft ein Verfahren zur Dimmung einer im Sekundärkreis eines Übertragers angeordneten Leuchtstofflampe, bei welchem der Übertrager primärseitig mit Impulsfolgen einstellbarer Dauer im Gegentakt angesteuert wird, sowie eine Anordnung zur Durchführung des Verfahrens.

Für viele Anwendungsfälle ist es notwendig, dass die Helligkeit von Leuchtstofflampen über einen großen Einstellbereich variiert werden muß. Das ist beispielsweise bei der Beleuchtung von Anzeigeeinrichtungen in Kraftfahrzeugen von Bedeutung. Hier ist wegen der starken Schwankungen des Umlichtes, insbesondere zwischen Tag und Nacht, ein solcher großer Einstellbereich erforderlich.

Es sind Anordnungen zum Betrieb einer Leuchtstofflampe mit steuerbarer Leuchtdichte bekannt, bei welchen die Entladungsstrecke der Leuchtstofflampe über einen Transformator mit einer steuerbaren Wechselstromquelle verbunden ist. Der Strom der Stromquelle wird über zwei im Gegentakt arbeitende Schalter der Primärwicklung des Transformators zugeführt. Die Schalter werden dabei von einem Gegentaktgenerator angesteuert.

Kaltkathodenleuchtstofflampen haben eine Zündverzugszeit, d.h. nach Anlegen einer Wechselspannung an die Lampe vergeht eine gewisse Zeit, bis die Kaltkathodenleuchtstofflampe Licht abgibt. Diese Zündverzugszeit ist nicht konstant und außerdem temperaturabhängig. Bei einer Sinuspaketansteuerung der Kaltkathodenleuchtstofflampe und stark abgedimmter Lampe ist die Schwankung der Zündverzugszeit größer als die Zeit, in der die Lampe Licht abgibt. Als Folgeerscheinung tritt ein Flackern der Leuchtstofflampe auf.

Gemäß der WO 97/03541 wird der Zeitraum kontrolliert, in welchem die Leuchtstofflampe brennt, um so das Flackern der Leuchtstofflampe zu minimieren.

In der US-PS 5,311,104 wird vorgeschlagen, dass die Leuchtstofflampe vor Beginn der einzelnen Impulsfolgen jeweils mit einem zusätzlichen, von einem separaten Zündgerät erzeugten Zündimpuls beaufschlagt wird.

Gemäß der DE 42 22 634 A1 ist ein Verfahren zum Betrieb einer Leuchtstofflampe bekannt, bei welchem eine Wechselspannung höherer Frequenz als Betriebsspannung und eine Rechteckspannung niedrigerer Frequenz mit einstellbarer Pulsbreite zum periodischen Sperren und Freigeben der Wechselspannung an der Leuchtstofflampe erzeugt wird. Dabei wird mit Hilfe einer Verzögerungseinrichtung erreicht, dass die unverzögerten Impulse die Zündimpulse auslösen, während die verzögerten Impulse zur Unterbrechung des Stromkreises führen.

Der Erfindung liegt somit die Aufgabe zugrunde, ein Verfahren anzugeben, welches ohne zusätzlichen gerätetechnischen Aufwand bei größtmöglicher Dimmrate eine flackerfreie Lichtabgabe über einen weiten Temperaturbereich gewährleistet.

Erfindungsgemäß wird die Aufgabe durch die Merkmale des Kennzeichens der Patentansprüche 1 und 6 gelöst.

Der Vorteil der Erfindung besteht darin, dass nach dem kurzzeitigen Anstoßen des Schwingkreises sich das Gas in der Kaltkathodenleuchtstofflampe ionisieren und organisieren kann und die Kaltkathodenleuchtstofflampe in dem sich anschließenden Normalbetrieb sofort flackerfrei Licht abgeben kann.

In einer Ausgestaltung wird der Übertrager durch Einzelimpulse angesteuert, welche hinsichtlich der Anzahl und/oder der Frequenz und/oder der Kurvenform sowie des Gleichspannungsanteils variierbar sind.

In einer Weiterbildung des Verfahrens erfolgt zwischen der lonisationsphase und der Zwangssteuerung der Leuchtstofflampe eine Ansteuerpause für die Ionisation der Leuchtstofflampe.

Vorteilhafterweise wird nach Abschluß der Zwangssteuerung der Leuchtstoff-lampe dem Schwingkreis die Energie entzogen, in dem beide Schalter gleichzeitig angesteuert werden. Die Lichtabgabe der Kaltkathodenleuchtstofflampe bricht sofort ab.

In einer Realisierung des erfindungsgemäßen Verfahrens weist eine Anordnung im Sekundärkreis des Übertragers eine Leuchtstofflampe auf, die über eine Impedanz ansteuerbar ist. Der Primärkreis des Übertragers ist mit einem ersten und einem zweiten, im Gegentakt schaltenden Schalter verbunden, die von einer Steuerlogik angesteuert werden.

Vorteilhafterweise sind die Schalter als MOS-Feldeffekttransistoren ausgebildet.

Um unter allen Betriebsbedingungen eine sichere Zündung der Kaltkathodenleuchtstofflampe zu gewährleisten, wird mit größtmöglicher Zündspannung gearbeitet. Zur Begrenzung der maximal zulässigen Sekundärspannung des Übertragers sind primärseitig zwei antiseriell geschaltete Z-Dioden angeordnet.

In einer Weiterbildung ist am Fußpunkt der MOS-Feldeffekttransistoren ein Shunt-widerstand angeordnet, welcher über einen Komparator mit der Steuerlogik verbunden ist. Dadurch wird eine Stromregelung durch eine überlagerte Taktung der Feldeffekttransistoren realisiert.

Die Erfindung läßt zahlreiche Ausführungsformen zu. Eine davon soll anhand der in der Zeichnung dargestellten Figuren näher erläutert werden. Es zeigt:
- Fig. 1: Schaltungsanordnung zur Ansteuerung einer Kaltkathodenleuchtstofflampe,
- Fig. 2a, b: Zeitdiagramme zur Ansteuerung der Kaltkathodenleuchtstofflampe,
- Fig. 3a, b: Zeitdiagramme zur Strombegrenzung der Kaltkathodenleuchtstofflampe.

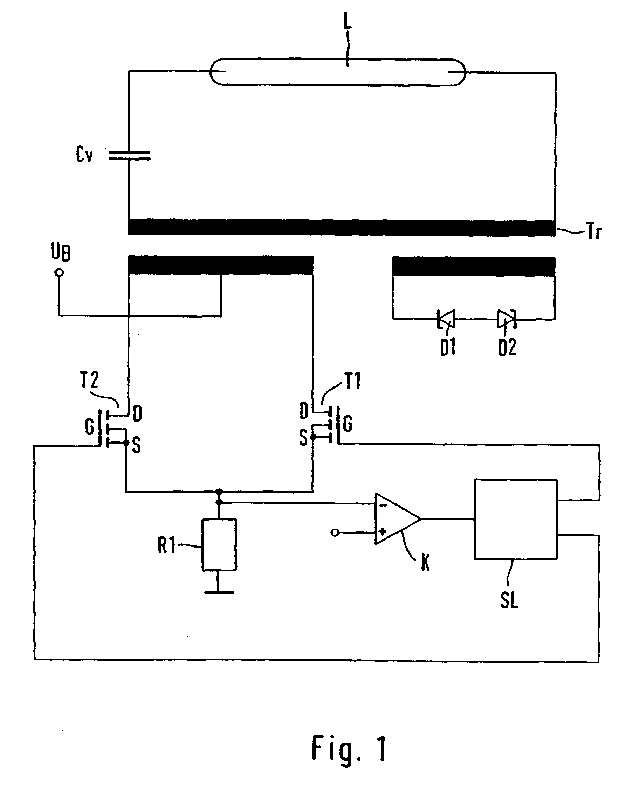

Figur 1 zeigt eine Kaltkathodenleuchtstofflampe L, die im Sekundärkreis eines Übertragers Tr angeordnet ist. Die Leuchtstofflampe L ist über einen Hochspannungskondensator Cv mit dem Sekundärkreis des Übertragers Tr verbunden. Der Übertrager Tr wird in seinem Primärkreis von zwei im Gegentakt schaltenden MOSFET-Transistoren T1 und T2 bestromt, welche von einer Steuerlogik SL angesteuert werden.

Diese Steuerlogik SL verarbeitet als Eingangssignal einen Spannungsabfall über einem Shuntwiderstand R1, welcher zwischen den Steuerelektroden der MOSFET-Transistoren T1, T2 und Masse angeordnet ist. Der Spannungsabfall wird dem invertierenden Eingang eines Komparators K zugeführt, an dessen nichtinvertierendem Eingang eine Referenzspannung U_{REF} anliegt. Der Ausgang des Komparators K ist mit der Steuerlogik SL verbunden.

In einer dritten Wicklung des Primärkreises des Übertragers Tr sind zwei antiseriell geschaltete Z-Dioden D1 und D2 angeordnet. Da unter allen Betriebsbedingungen eine sichere Zündung der Kaltkathodenleuchtstofflampe zu gewährleisten ist, muss die Zündspannung möglichst groß sein. Mit Hilfe der beschriebenen Diodenanordnung wird die Sekundärspannung des Übertragers Tr primärseitig begrenzt.

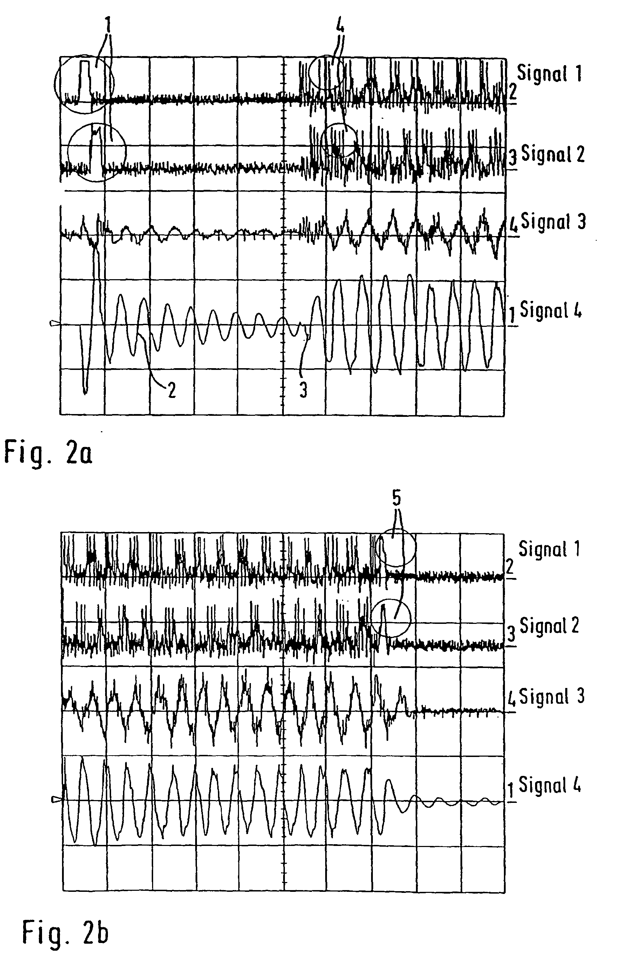

Die Funktion der Ansteuerung der Kaltkathodenleuchtstofflampe L wird im folgenden unter Bezugnahme auf Figur 2a und b erläutert. Dabei sind über der Zeit aufgetragen
- Signal 1: Ansteuersignal am MOSFET-T1
- Signal 2: Ansteuersignal am MOSFET-T2
- Signal 3: Strom durch die Kaltkathodenleuchtstofflampe L
- Signal 4: Spannung über der Kaltkathodenleuchtstofflampe L

Die beiden MOSFET-Transistoren T1, T2 werden nacheinander jeweils mit einem Impuls 1 einmalig angesteuert. Dadurch wird der Schwingkreis, bestehend aus dem Stromübertrager Tr, dem Hochspannungskondensator Cv und der Leuchtstofflampe L angestoßen. Der Schwingkreis klingt nach einer e-Funktion ab (vergl. Signal 4, Punkt 2 in Fig. 2a). Das Gas in der Kaltkathodenleuchtstofflampe L kann sich in dieser Zeit ionisieren und organisieren. Nach einer bestimmten Zeit nach dem erstmaligen Anstoßen des Schwingkreises, z. B. nach 80 µsec., werden die Transistoren T1, T2 kontinuierlich in der üblichen Weise wechselseitig angesteuert (Signal 1 und 2, Punkt 4). Die Kaltkathodenleuchtstofflampe L gibt ab diesem Zeitpunkt sofort Licht ab (wie Signal 4 in Punkt 3 zu entnehmen ist).

Nach der gewünschten Anzahl von Ansteuerimpulsen werden die beiden MOSFET-Transistoren gleichzeitig angesteuert, wie aus Figur 2b, Signal 1 und 2 zum Zeitpunkt 5 hervorgeht. Dem Schwingkreis Tr, Cv, L wird dadurch schlagartig die Energie entzogen und die Lichtabgabe der Kaltkathodenleuchtstofflampe bricht sofort ab.

Bei Raumtemperatur wurde mit einer Kaltkathodenleuchtstofflampe mit einer Nennleuchtdichte von 16.000 cd/m² ein flackerfreier Dimmbereich von ca. 10.000 : 1 erreicht.

Das erfindungsgemäße Verfahren hat den Vorteil, dass der flackerfreie Betrieb der Leuchtstofflampe L nur durch die gezielte Ansteuerung der MOSFET-Transistoren T1, T2 erreicht wird. Auf umfangreiche Steuerschaltungen, wie sonst üblich, kann verzichtet werden.

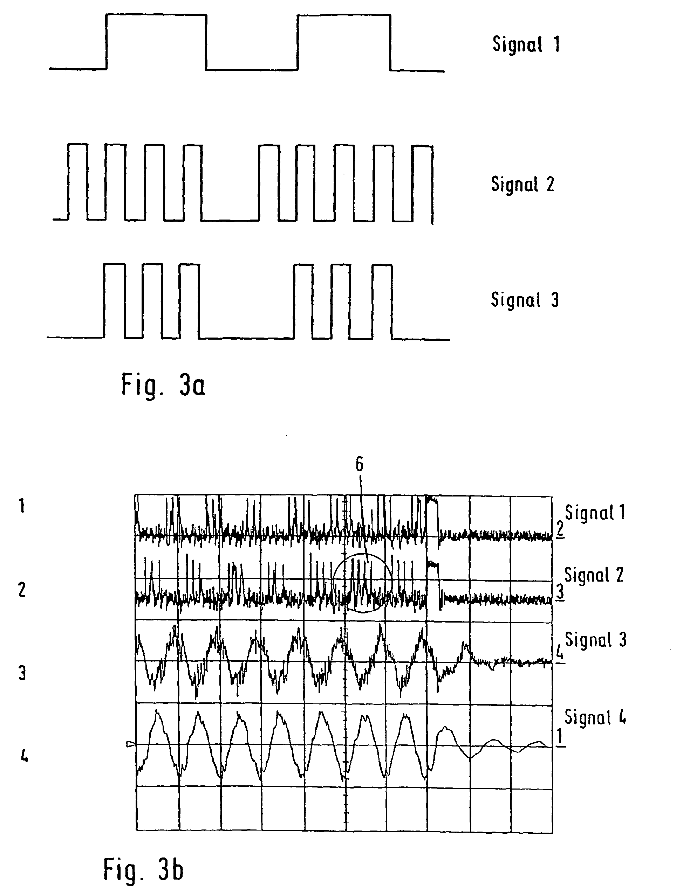

In Figur 3a wird die Ansteuerzeit des MOSFET-Transistors T2 im Zusammenhang mit der Strombegrenzung dargestellt.

Die Steuerlogik SL steuert den MOSFET-Transistor T2 impulsförmig an (Figur 3a, Signal 1). Der durch den MOSFET - Transistor T2 fließende Strom wird als Spannungsabfall über dem Shuntwiderstand R1 gemessen und durch den Komparator K ausgewertet, der je nachdem, ob die gemessene Spannung den Referenzwert überschreitet oder nicht, ein Low- oder High-Signal abgibt. (Figur 3a, Signal 2). Das Ausgangssignal des Komparators K wird in der Steuerlogik SL logisch mit dem Signal 1 verknüpft. Dies führt dazu, daß der MOSFET-Transistor T2 während der Ansteuerung durch die Steuerlogik SL im Takt des Ausgangssignals des Komparators K durchgesteuert oder gesperrt wird.

Ist der Strom zu groß, wird der Transistor T2 somit abgeschaltet, was in Figur 3a, Signal 3 und in Figur 3b , Signal 2 zum Zeitpunkt 6 dargestellt ist. In Figur 3a stellt das Signal 1 somit die Hüllkurve für das Signal 3 dar.

Für den MOSFET-Transistor T1 gilt dieselbe Verfahrensweise, wobei die beiden Transistoren T1 und T2 alternierend von der Steuerlogik SL angesteuert werden. Das in Figur 3a, Signal 2 dargestellte Komparatorausgangssignal zeigt, daß die Auswertung für beide Transistoren über den selben Shuntwiderstand R1 vorgenommen wird.

Aufgrund dieser Maßnahme läßt sich der sonst üblicherweise benötigte Stromregler mit Leistungstransistor und zugehöriger Ansteuerung einsparen.

## Patentansprüche

1. Verfahren zur Dimmung einer im Sekundärkreis eines Übertragers angeordneten Leuchtstofflampe, bei welchem der Übertrager primärseitig mit Impulsfolgen einstellbarer Dauer im Gegentakt angesteuert wird, **dadurch gekennzeichnet, dass** ein die Leuchtstofflampe (L) enthaltender Schwingkreis (Tr, Cᵥ) vor Beginn jeder Impulsfolge zur Ionisation des Leuchtstofflampengases kurzzeitig derart in Schwingungen versetzt wird, dass ein Leuchten der Leuchtstofflampe (L) sicher verhindert wird und dass nach erfolgter Ionisation die an sich bekannte Zwangssteuerung der Leuchtstofflampe (L) erfolgt.

2. Verfahren nach Anspruch 1, **dadurch gekennzeichnet, dass** der Übertrager (Tr) durch Einzelimpulse angesteuert wird.

3. Verfahren nach Anspruch 2, **dadurch gekennzeichnet , dass** die Einzelimpulse hinsichtlich der Anzahl und/oder Frequenz und/oder Amplitude sowie des Gleichspannungsanteils variierbar sind.

4. Verfahren nach Anspruch 1 oder 2, **dadurch gekennzeichnet, dass** zwischen der lonisationsphase und der Zwangssteuerung der Leuchtstofflampe (L) eine einstellbare Ansteuerpause für die Ionisation der Leuchtstofflampe erfolgt.

5. Verfahren nach Anspruch 1 oder 2, **dadurch gekennzeichnet, dass** am Ende jeder Impulsfolge ein Zwangsabklingen des Schwingkreises (Tr, Cᵥ) durch primärseitiges Kurzschließen des Übertragers (Tr) erfolgt.

6. Anordnung zur Dimmung einer im Sekundärkreis eines Übertragers angeordneten Leuchtstofflampe, wobei im Sekundärkreis des Übertragers (Tr) über eine Impedanz (Cv) eine Leuchtstofflampe (L) ansteuerbar ist und dessen Primärkreis mit einem ersten und einem zweiten, im Gegentakt schaltenden Schalter (T1, T2) verbunden ist die von einer Steuerlogik (SL) angesteuert werden, **dadurch gekennzeichnet, dass** der Übertrager primärseitig mit Impulsfolgen einstellbarer Dauer im Gegentakt angesteuert wird, dass ein die Leuchtstofflampe (L) enthaltener Schwingkreis (Tr, Cv) vor Beginn jeder Impulsfolge zur Ionisation des Leuchtstofflampengases kurzzeitig derart in Schwingungen versetzt wird, dass ein Leuchten der Leuchtstofflampe (L) sicher verhindert wird und dass nach erfolgter Ionisation die an sich bekannte Zwangssteuerung der Leuchtstofflampe (L) erfolgt.

7. Anordnung nach Anspruch 6, **dadurch gekennzeichnet, dass** die Schalter (T1, T2) MOS-Feldeffekttransistoren sind.

8. Anordnung nach Anspruch 6, **dadurch gekennzeichnet, dass** die Sekundärspannung des Übertragers (Tr) primärseitig über eine Hilfswicklung durch zwei antiseriell geschaltete Z-Dioden (D1, D2) begrenzt wird.

9. Anordnung nach Anspruch 7, **dadurch gekennzeichnet, dass** am gemeinsamen Fußpunkt der MOS-Feldeffekttransistoren ein Shuntwiderstand (R1) angeordnet ist, welcher über einen Komparator (K) mit der Steuerlogik (SL) verbunden ist, wodurch eine Stromregelung durch überlagerte Taktung der Feldeffekttransistoren realisiert wird.

## Claims

1. Method for dimming a fluorescent lamp arranged in the secondary circuit of a transformer, in which the transformer is driven in a push-pull manner with pulse trains of adjustable duration on the primary side, **characterized in that** a resonant circuit (Tr, Cᵥ) containing the fluorescent lamp (L) is momentarily made to oscillate, before the beginning of each pulse train for the ionization of the fluorescent lamp gas, in such a way that the fluorescent lamp (L) is reliably prevented from illuminating, and **in that** the fluorescent lamp (L) is positively controlled in a manner known per se once ionization has occurred.

2. Method according to Claim 1, **characterized in that** the transformer (Tr) is driven by individual pulses.

3. Method according to Claim 2, **characterized in that** the individual pulses are variable in respect of number and/or frequency and/or amplitude and also the DC voltage component.

4. Method according to Claim 1 or 2, **characterized in that** an adjustable drive intermission for the ionization of the fluorescent lamp takes place between the ionization phase and the positive control of the fluorescent lamp (L).

5. Method according to Claim 1 or 2, **characterized in that** a forced decay of the resonant circuit (Tr, Cᵥ) takes place at the end of each pulse train as a result of the transformer (Tr) being short-circuited on the primary side.

6. Arrangement for dimming a fluorescent lamp arranged in the secondary circuit of a transformer, a fluorescent lamp (L) can be driven via an impedance (Cᵥ) in the secondary circuit of the transformer (Tr) and the primary circuit of which transformer is connected to a first and to a second switch (T1, T2), which switch in a push-pull manner and are driven by a control logic unit (SL), **characterized in that** the transformer is driven in a push-pull manner with pulse trains of adjustable duration on the primary side, **in that** a resonant circuit (Tr, Cᵥ) containing the fluorescent lamp (L) is momentarily made to oscillate, before the beginning of each pulse train for the ionization of the fluorescent lamp gas, in such a way that the fluorescent lamp (L) is reliably prevented from illuminating, and **in that** the fluorescent lamp (L) is positively controlled in a manner known per se once ionization has occurred.

7. Arrangement according to Claim 6, **characterized in that** the switches (T1, T2) are MOS field-effect transistors.

8. Arrangement according to Claim 6, **characterized in that** the secondary voltage of the transformer (Tr) is limited by two reverse-connected series zener diodes (D1, D2) via an auxiliary winding on the primary side.

9. Arrangement according to Claim 7, **characterized in that** a shunt resistor (R1) is arranged at the common reference-earth point of the MOS field-effect transistors and is connected via a comparator (K) to the control logic unit (SL), whereby current regulation is realized by superposed pulsing of the field-effect transistors.

## Revendications

1. Procédé servant à la gradation d'un tube fluorescent disposé dans le circuit secondaire d'un transformateur, où le transformateur est commandé en push-pull, du côté primaire, par des trains d'impulsions de durée réglable, **caractérisé par le fait qu'**un circuit oscillant (Tr, Cv) renfermant le tube fluorescent (L) est, avant le début de chaque train d'impulsions, pour l'ionisation du gaz du tube fluorescent, brièvement mis en oscillation, que le tube fluorescent (L) est, d'une façon fiable, empêché de rayonner et que, après l'ionisation, la commande forcée, déjà connue en soi, du tube fluorescent (L) a lieu.

2. Procédé selon la revendication 1 **caractérisé par le fait que** le transformateur (Tr) est commandé par des impulsions isolées.

3. Procédé selon la revendication 2 **caractérisé par le fait qu'**il est possible de faire varier les impulsions isolées en ce qui concerne le nombre et / ou la fréquence et / ou l'amplitude, ainsi que la proportion de tension continue.

4. Procédé selon la revendication 1 ou 2 **caractérisé par le fait que**, entre la phase de ionisation et la commande forcée du tube fluorescent (L), il se produit une pause de commande réglable pour l'ionisation du tube fluorescent.

5. Procédé selon la revendication 1 ou 2 **caractérisé par le fait que**, à la fin de chaque train d'impulsions, il se produit un évanouissement forcé des oscillations du circuit oscillant (Tr, Cv) provoqué par un court-circuit côté primaire du transformateur (Tr).

6. Circuit électrique permettant la gradation d'un tube fluorescent disposé dans le circuit secondaire d'un transformateur, où, dans le circuit secondaire du transformateur (Tr), un tube fluorescent (L) peut être commandé à travers une impédance (Cv) et où le circuit primaire est raccordé à un premier et à un deuxième commutateur (T1, T2) commutant en push-pull, lesquels sont commandés par une logique de commande (SL), **caractérisé par le fait que** le transformateur est commandé, du côté primaire, en push-pull par des trains d'impulsions de durée réglable, qu'un circuit oscillant (Tr, Cv) comprenant le tube fluorescent (L) est, avant le début de chaque train d'impulsions, pour l'ionisation du gaz du tube fluorescent, mis brièvement en oscillation de telle manière que le tube fluorescent (L) est, d'une façon fiable, empêché de rayonner et que, après l'ionisation, la commande forcée, déjà connue en soi, du tube fluorescent (L) a lieu.

7. Circuit électrique selon la revendication 6 **caractérisé par le fait que** les commutateurs (T1, T2) sont des transistors MOS à effet de champ.

8. Circuit électrique selon la revendication 6 **caractérisé par le fait que** la tension secondaire du transformateur (Tr) est limitée du côté primaire, à travers un enroulement auxiliaire, par deux diodes de Zener (D1, D2) montées en série inversée.

9. Circuit électrique selon la revendication 7 **caractérisé par le fait qu'**une résistance de shunt (R1) est montée au point commun des transistors MOS à effet de champ et est reliée, à travers un comparateur (K), à la logique de commande (SL), si bien que, de cette façon, une régulation de courant est réalisée par commande cadencée superposée des transistors à effet de champ.
